# EUROPEAN PATENT APPLICATION

(11) **EP 2 042 963 A2**
(43) Date of publication of application: **01.04.2009**
(21) Application number: 08159084.6
(22) Date of filing: 26.06.2008
(51) Int. Cl.: G05D 1/10

(54) **Method and system for automatic path planning and obstacle/collision avoidance of autonomous vehicles**

(30) Priority: 28.09.2007 US 975969 P; 28.09.2007 US 975967 P; 04.06.2008 US 133321
(71) Applicant: Honeywell International Inc., Morristown NJ 07960 (US)
(72) Inventor: Elgersma, Michael R., Plymouth, MN 55442 (US); Dajani-Brown, Samar, Blaine, MN 55449 (US); Pratt, Stephen G., St. Louis Park, MN 55416 (US); Fregene, Kingsley O. C., Sicklerville, NJ 08081 (US); Ariyur, Kartik B., Minneapolis, MN 55409 (US)
(74) Representative: Buckley, Guy Julian

(57) **Abstract**

Method and systems of traversing through a domain is provided. One method comprises getting a set of widely spaced waypoints, assigning the next waypoint to be the goal, then using a Laplacian path planner to construct a desired finely detailed path towards the goal, through the domain that avoids boundaries and objects in the domain. Assigning a potential value of v(r)=0 for r on boundaries and obstacles. Assigning a potential value of v(r)=-1 for r on a goal region, wherein the goal is a point on a planned path. Obtaining a numerical solution to the desired path with a Laplace's equation by gridding up the domain with a multi-sized cell grid, wherein the cells near an object are denser then the cells away from the objects. Iteratively setting a potential at each interior point equal to the average of its nearest neighbors and following the numerical solution provided by the Laplace's equation to the goal region.

## Description

### Government License Rights

The U.S. Government may have certain rights in the present invention as provided for by the terms of Government Program name OAVII awarded by DARPA.

### Cross Reference to Related Cases

The present application claims priority to Provisional Application No. 60/975,967 filed on September 28, 2007 and Provisional Application No. 60/975,969 filed on September 28, 2007, both of which are incorporated in there entirety in the present application. The present application is also related to Client Application No H0017234, entitled "AUTOMATIC PLANNING AND REGULATION OF THE SPEED OF AUTONOMOUS VEHICLES," filed even date herewith which is also incorporated in its entirety in the present application.

### Background

Military reconnaissance applications using autonomous air vehicles perform missions by flying a set of a-priori selected waypoints. In cluttered urban warfare environments, it is important that such aerial vehicles avoid obstacles while flying a path intended to accomplish their mission. However, avoiding obstacles such tall buildings, trees and electric wires in real time is an issue. Similar issues regarding the avoidance of obstacles occur for autonomous ground vehicles. Moreover, another issue encountered in ground vehicles in urban settings is having the vehicle comply with local traffic regulations such as stopping for stop signs, passing a slow vehicle, allowing other vehicles to pass as well as having the capability of safely completing 3-point turns.

For the reasons stated above and for other reasons stated below which will become apparent to those skilled in the art upon reading and understanding the present specification, there is a need in the art for an effective and efficient method of controlling autonomous vehicles to avoid obstacles and regarding land vehicles, obeying traffic laws.

### Summary of Invention

The above-mentioned problems of current systems are addressed by embodiments of the present invention and will be understood by reading and studying the following specification. The following summary is made by way of example and not by way of limitation. It is merely provided to aid the reader in understanding some of the aspects of the invention.

In one embodiment, a method of traversing through a domain is provided. The method comprises setting a set of waypoints to construct a desired path through the domain that avoids boundaries and objects in the domain. Assigning a potential value of v(r)=0 for r on boundaries and obstacles. Assigning a potential value of v(r)=-1 for r on a goal region, wherein the goal is a point on a planned path. Obtaining a numerical solution to the desired path with a Laplace's equation by gridding up the domain with a multi-sized cell grid, wherein the cells near an object are denser then the cells away from the objects. Iteratively setting a potential at each interior point equal to the average of its nearest neighbors and following the numerical solution provided by the Laplace's equation to the goal region.

### Brief Description of the Drawings

The present invention can be more easily understood and further advantages and uses thereof more readily apparent, when considered in view of the detailed description and the following figures in which:
Figure 1 is a block diagram of a autonomous vehicle system of one embodiment of the present invention;
Figure 2A is a block diagram of an obstacle avoidance system of one embodiment of the present invention;
Figure 2B is a block diagram of another obstacle avoidance system of one embodiment of the present invention;
Figure 3 is an example of an obstacle avoidance graph of one embodiment of the present invention;
Figure 4A illustrates a grid system of one embodiment of the present invention;
Figure 4B illustrates a traverse grid path of one embodiment of the present invention;
Figure 4C illustrates an area to be traversed;
Figure 4D illustrates an irregular quadtree grid of one embodiment of the present invention;
Figure 5 illustrates another grid system in three dimensions of one embodiment of the present invention;
Figure 6 illustrates a computational box system of one embodiment of the present invention;
Figure 7 illustrates dealing with intersections of one embodiment of the present invention;
Figure 8 illustrates a vehicle control traverse area of one embodiment of the present invention;
Figure 9 illustrates a control flow diagram of one embodiment of the present invention;
Figure 10A is an example of a physical domain of one embodiment of the present invention;
Figure 10B is an example of grid squares of one embodiment of the present invention;
Figure 10C is an example of the grid of Figure 10B overlaid on the physical domain of Figure 10A of one embodiment of the present invention; and
Figure 10D is an example of boundaries of one embodiment of the present invention.

In accordance with common practice, the various described features are not drawn to scale but are drawn to emphasize specific features relevant to the present invention. Reference characters denote like elements throughout Figures and text.

### Detailed Description

In the following detailed description, reference is made to the accompanying drawings, which form a part hereof, and in which is shown by way of illustration specific embodiments in which the inventions may be practiced. These embodiments are described in sufficient detail to enable those skilled in the art to practice the invention, and it is to be understood that other embodiments may be utilized and that logical, mechanical and electrical changes may be made without departing from the spirit and scope of the present invention. The following detailed description is, therefore, not to be taken in a limiting sense, and the scope of the present invention is defined only by the claims and equivalents thereof.

Embodiments of the present invention provide a system for automatic path planning and collision avoidance for autonomous vehicles. Such vehicles include air, land and water vehicles. Embodiments implement obstacle avoidance algorithms in software and run the software onboard the vehicles' computers. In one embodiment, the software is run by a control station that is associated with many small unmanned vehicles. In this embodiments, an obstacle free path is uploaded (in real time) to the vehicle's computer over a communication link. Embodiments use a laplacian algorithm for path planning, obstacle avoidance and collision avoidance. In some embodiments, a multi-sized grid technique is applied to plan a path and for collision avoidance.

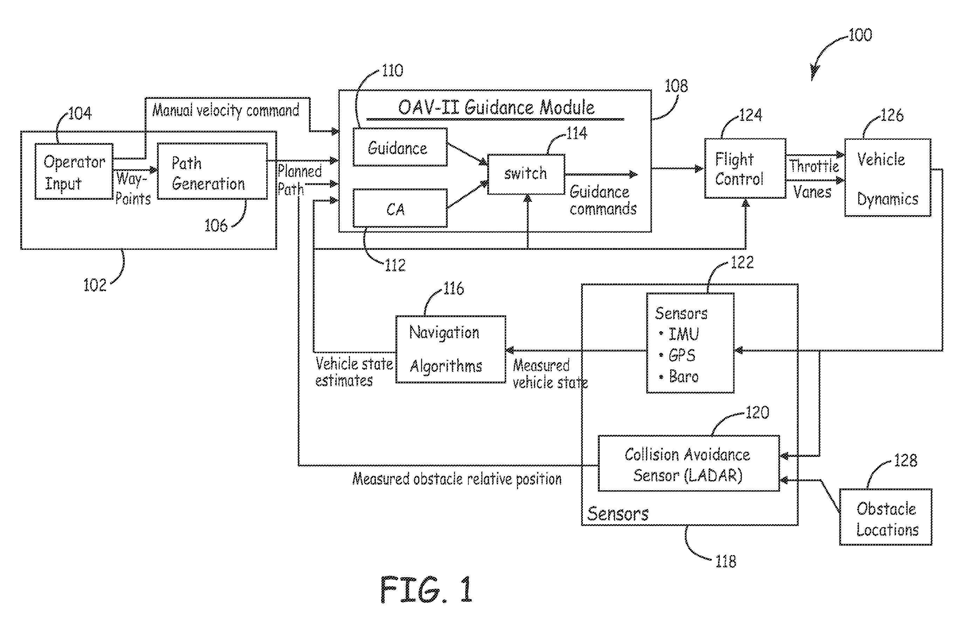

An example of an autonomous vehicle system 100 of one embodiment is illustrated in Figure 1. As illustrated the vehicle system 100 includes an input-path generating module 102 that includes an operator input 104 that sets waypoints and a path generation 106 that plans a path based on the waypoints. The system further includes a guidance module 108. As illustrated, the operator input 104 of the input-path generating module 102 provides manual velocity commands to the guidance module 108. In one embodiment, the operator input 104 includes a receiver to receive remote communications from a central command. The path generation 106 of the input-path generating module 102 provides a planned path to the guidance module 108. The guidance module 108 includes guidance system 110, collision avoidance system 112 and switch 114. As illustrated, guidance commands are output from the guidance module 108 to a vehicle control module 124. In Figure 1, the vehicle control module is a flight control 124. However, as discussed above, the present application is not limited to flight vehicles. Hence the vehicle control module 124 can be a control for any type of vehicle such as ground based vehicle including trucks or cars and even water vessels. The vehicle control module 124 provides control signals to a vehicle 126. The example of control signals in Figure 1, includes throttle control signals and vane control signals. It will be understood that other type of control signals depending of the vehicle being controlled.

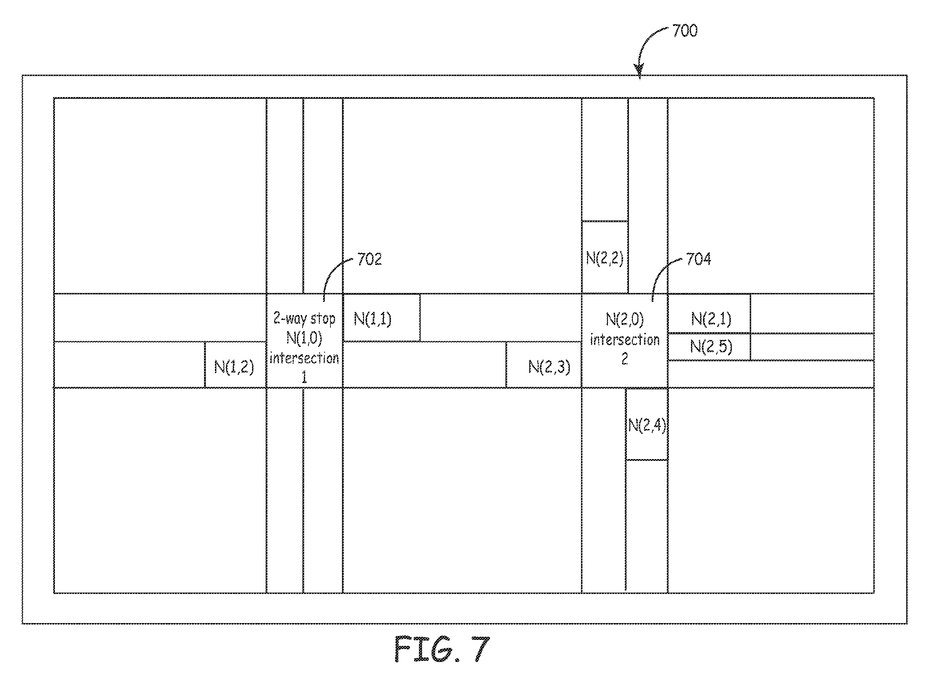

As Figure 1 also illustrates, the vehicle system 100 includes a sensor system 118 that provides a feedback loop to the guidance module 108. The sensor system 118 in this example includes sensors 122 such as an inertial measurement unit (IMU), global positioning system (GPS) and Barometric pressure sensors and a collision avoidance sensor 120. An example of collision avoidance sensor is a scanning laser range-finder system (LADAR). Also illustrated is physical obstacle module 128 whose locations are measured by the collision avoidance sensor 118. The sensors 122 provide a measured vehicle state to navigation algorithms 116. The navigation algorithms 116 provide a feedback signal of vehicle state estimates to the guidance module 108. The collision avoidance sensor 120 provides a measured obstacle relative position signal to the guidance module 108. Depending on the vehicle type, i.e. land, air or water, and the location of the vehicle, the guidance module 108 in some embodiments implements specific logic dictated by the then current situation in generating the control signals. For example, in regards to a land vehicle in an urban setting, traffic logic is implemented. An example of this type of logic is discussed below in relation to Figures 7-9 of the specification.

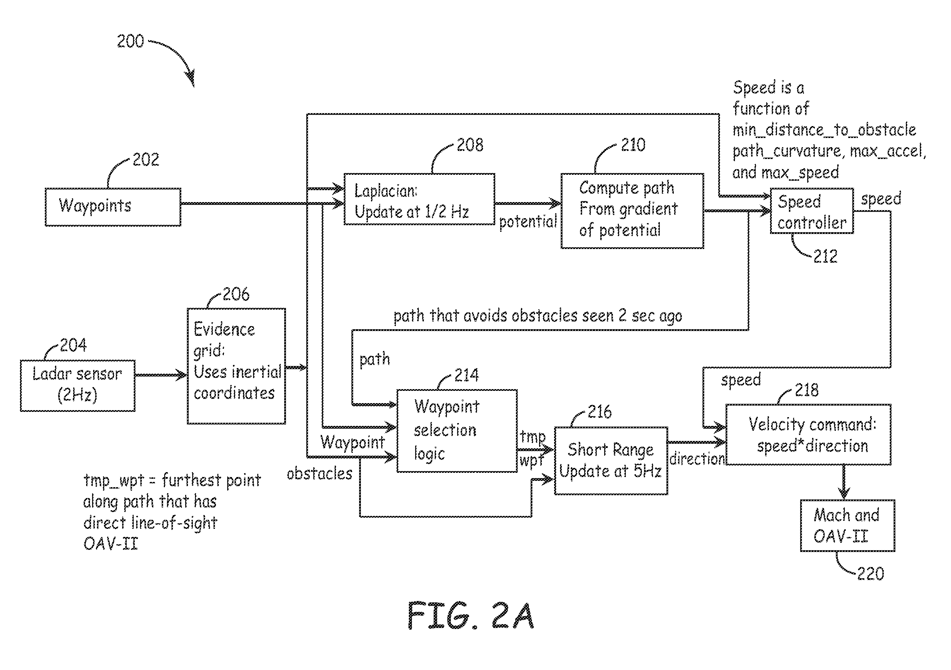

A block diagram of an obstacle avoidance system 200 incorporating a laplacian algorithm of one embodiment is illustrated in Figure 2A. The avoidance system 200 in this example uses two different algorithms for collision avoidance. The first algorithm is a long range algorithm 208 which is best used as generally a long-range planner for dense obstacles. The second is a short term algorithm 216 which is faster and better suited for sparse obstacles. The avoidance system 200 integrates both the long range algorithm 208 and the short term algorithm 216. In one embodiment, the long range algorithm 208 is a laplacian 208. In anther embodiment a second laplacian is used for the short range algorithm.
Moreover, in yet one embodiment, a single laplacian is used for both the long range and the short range algorithms. As Figure 2A illustrates, waypoints 202 are provide to the laplacian 208 and to a waypoint selection logic 214. Ladar sensor 204 provides signals relating to obstacles to an evidence grid 206 which uses inertial coordinates and provides signals to the laplacian 208, a speed controller 212, the waypoint selection logic 214 and the short range algorithm 216. As further illustrated in Figure 2A, the laplacian 208 provides an output signal to a compute path from gradient of potential module 210 which outputs a signal to the speed controller 212 and the waypoint selection logic 214. The speed controller 212 provide a speed signal to a velocity command module 218 that controls speed and direction. The short range algorithm 216 outputs a direction signal to the velocity command 218. The velocity command 218 outputs a control signal to vehicle control module 220. As illustrated, in this embodiment, the laplacian algorithm is run at a slower frequency (1/2 Hz) than the short range algorithm (5 Hz). Other types of avoidance systems are contemplated including systems that only incorporate a laplacian and the present invention is not limited to an integrated system.

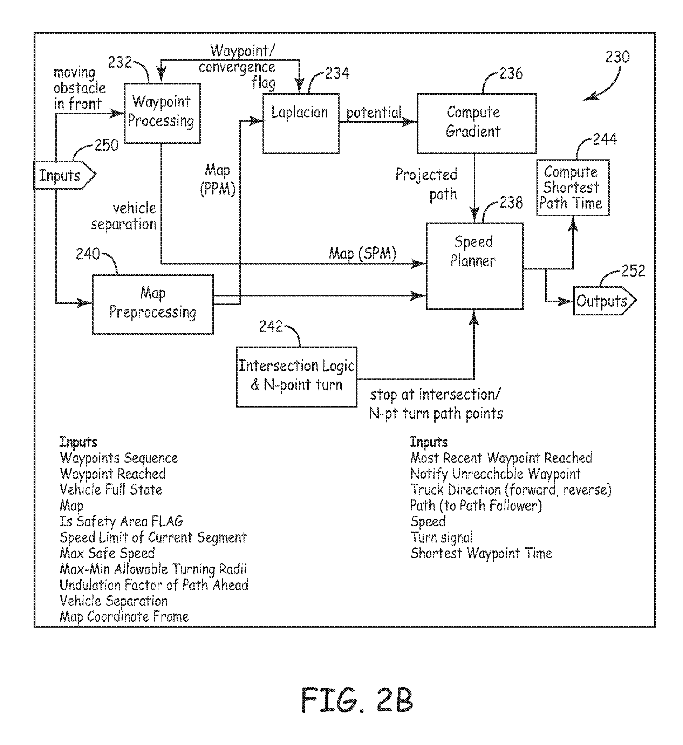

An example of a collision avoidance system 230 that only incorporates a laplacian is illustrated in Figure 2B. This system 230 is geared towards a ground vehicle. The system 230 includes a waypoint processing module 232 that receives inputs 250. Examples of the inputs include information related to but not limited to waypoints sequence, waypoint reached, vehicle full state, map, is safety area flag, speed limit of current segment, max-min allowable turn radii, undulation factor of path ahead, vehicle separation and map coordinate frame. The waypoint processing module 232 communicates waypoint and convergence flag information with the laplacian algorithm 234. The waypoint processing module 232 further provides vehicle separation information to a speed planner 238. The laplacian 234 provides a potential to a compute gradient module 236. The compute gradient 236 provides a projected path to the speed planer 238. As also illustrated, the inputs are also provided to a map processing module 240. The map processing module 240 provides an output to the laplacian 234 and the speed planner 238. The speed planner 238 receives stop at intersection/N-pt turn path points information from an intersection logic and N-point turn module 242. The speed planner 238 in turn provides an output to a compute-shortest-path-time module 244 and an output 252. Examples of the output include but are not limited to most recent waypoint reached, notify unreachable waypoint, direction (forward, back), speed, turn signal and shortest waypoint time.

The methods and techniques used by the autonomous vehicle system 100 and the collision avoidance systems 200 and 230 as described above can be implemented in digital electronic circuitry, or with a programmable processor (for example, a special-purpose processor or a general-purpose processor such as a computer) firmware, software, or in combinations of them. Apparatus embodying these techniques may include appropriate input and output devices, a programmable processor, and a storage medium tangibly embodying program instructions for execution by the programmable processor. A process embodying these techniques may be performed by a programmable processor executing a program of instructions to perform desired functions by operating on input data and generating appropriate output. The techniques may advantageously be implemented in one or more programs that are executable on a programmable system including at least one programmable processor coupled to receive data and instructions from, and to transmit data and instructions to, a data storage system, at least one input device, and at least one output device. Generally, a processor will receive instructions and data from a read-only memory and/or a random access memory. Storage devices suitable for tangibly embodying computer program instructions and data include all forms of non-volatile memory, including by way of example semiconductor memory devices, such as EPROM, EEPROM, and flash memory devices; magnetic disks such as internal hard disks and removable disks; magnetooptical disks; and DVD disks. Any of the foregoing may be supplemented by, or incorporated in, specially-designed application-specific integrated circuits (ASICs).

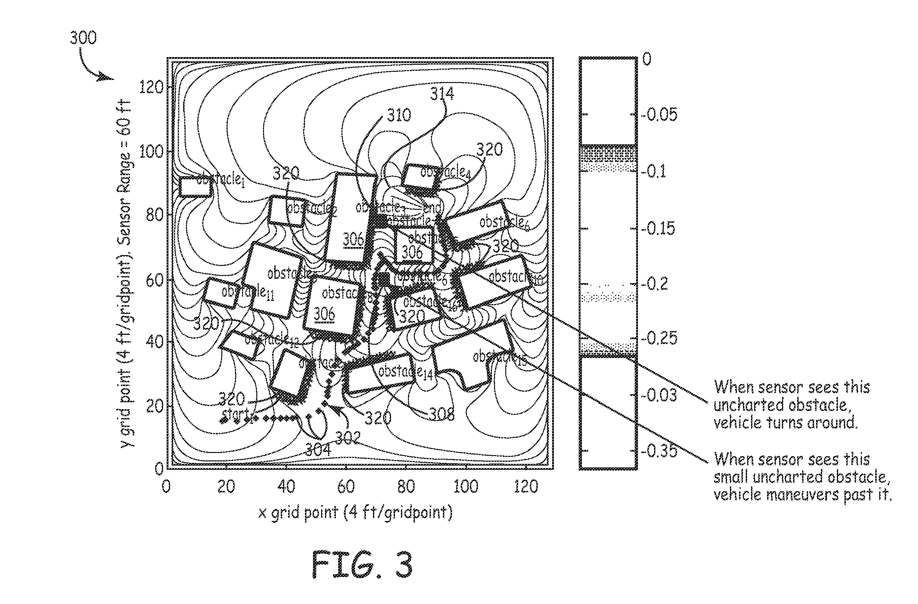

Referring to Figure 3, in illustration of a path planning and obstacle avoidance graph 300 using laplacian methods is provided. The graph illustrates obstacles 306 (buildings) and a path 302 defined by waypoints 304. In this illustration, two uncharted obstacles 308 and 310 are encountered. Vehicle 312 must avoid the uncharted obstacles 308 and 310 as it traverses around the buildings 306. Also illustrated are the sensor signals 314 used to sense the uncharted obstacles 308 and 310 and are used to sense visible points 320 on all obstacles. The sensed obstacle points are stored in a database.

As discussed above, a laplacian is used to plan a path around obstacles. Given an initial position of a vehicle, r(0) and a set of waypoints constructing a desired path, embodiments construct paths, r(t), through a either a 2D domain for a land vehicle and a 3D domain for an air vehicle by assigning a potential value of v(r)=0 on any boundaries or obstacle, and a potential of v(r)=-1 for r on the goal region, where the goal is a point of the planned path. Then Laplace's equation is solved in the interior of the respective 2D or 3D region, guaranteeing no minima in the interior domain, leaving a global minimum of v(r)=-1 for r on the goal region, and global maxima of v(r)=0 for r on any boundaries or obstacle. A path from any initial point, r(0), to the goal, is constructed by following the negative gradient of the potential, v.

A physical analogy for paths obtained by Laplace's equation is to apply a voltage of 0 to all boundary and obstacle locations, a voltage of -1 to goal region, fill interior region with a conductor, then positive charges will follow paths from anywhere in the interior to the goal region. Laplace's equation sets the divergence of a potential to zero in the interior of a domain. Solutions of Laplace's equation are harmonic functions, which have no local minima in the interior of their domain.

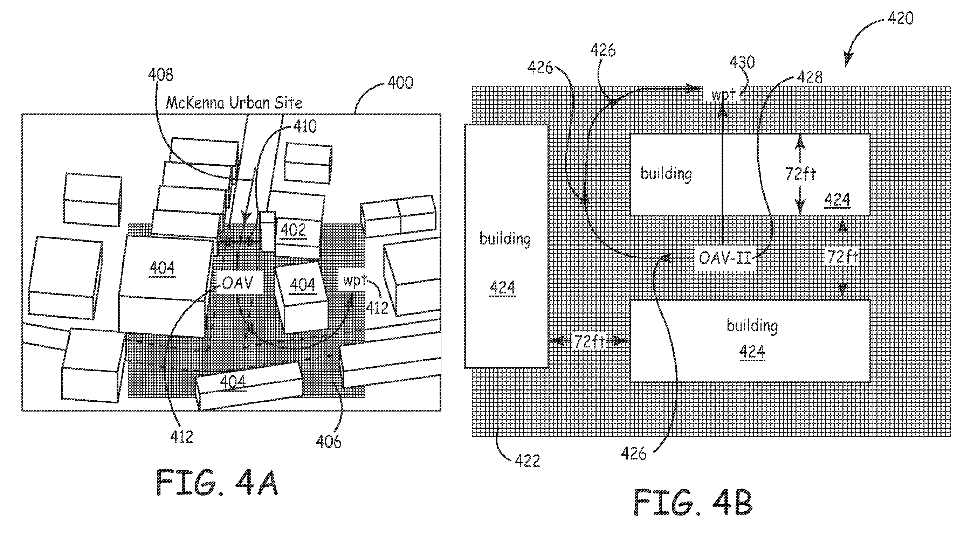

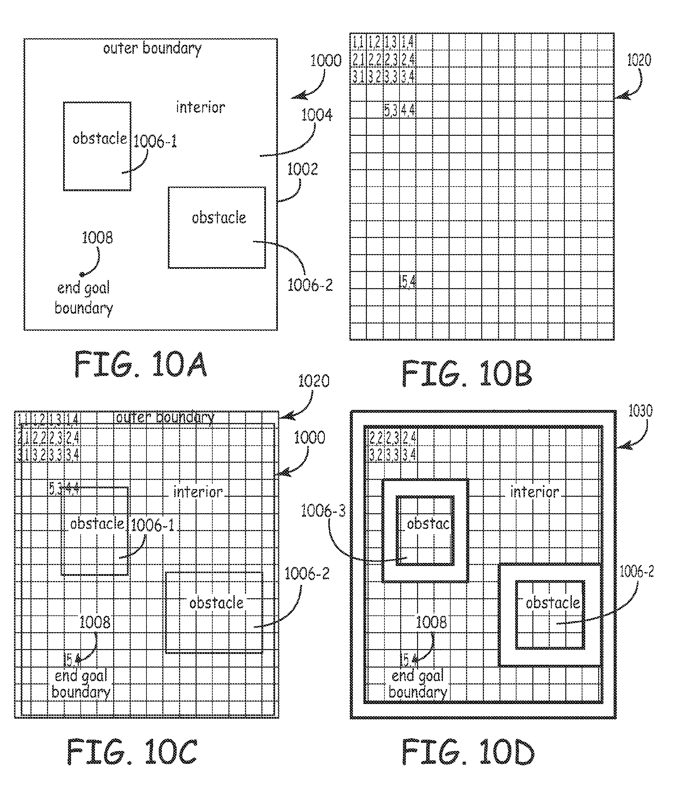

Numerical solutions of Laplace's equation in embodiments are obtained by gridding the domain, then iteratively setting the potential at each interior point, equal to the average of its nearest neighbors. In particular, a laplacian path-planning obstacle-avoidance is applied by gridding up a domain with points r(i,j) in 2D (similar for 3D) A laplacian algorithm is run once at t=0, then rerun each time a new obstacle is seen, since newly sensed obstacles change which points are boundary points. The Laplacian algorithm is defined by the following iteration: if r(i, j) is in interior: v(i, j) = [v(i-1, j) + v(i+1, j) + v(i, j-1) + v(i, j+1)]/4, if r(i, j) on outer boundary or an obstacle : v(i, j) = 0, and if r(i, j) on end goal boundary: v(i,j) = -1. This is further described in Figures 10(A-D). Embodiments use a grid system to plan a path. An example of a grid system 406 is illustrated in traverse graph 400 of Figure 4A. The grid size is selected to provide sufficient grids 406 between obstacles 402 and 404. In this example, a 10 grid count 410 is between building 402 and the next closest obstacle 404 is used. Figure 4A, further illustrates a vehicle path 408 and a waypoint 412. In the traverse graph 400 a (64 wide) X (64 deep) and a 32 (high) evidence grid is used. Another example of a traverse grid 410 is illustrated in Figure 4B. In this example, waypoint 430 on a grid 422 is illustrated. As Figure 4B further illustrates, the path to a waypoint 430 traverses around buildings 424. In this embodiment, either a 128 X 128 X 64 evidence grid is used with a (3ft)³ cubes or a 64 X 64 X 32 grid with (6ft)³ cubes are used depending on the level of accuracy needed.

In some embodiments, the size of the cells that make up the grid in a graph is varied. By varying the grid size (halving or doubling cell length at each step) from the crudest that still leaves paths between obstacles, to the finest that is required for smooth paths, the iteration can be made to converge in a time proportional to the number, N, of cells in the finest grid. The solution on crude grids is cheap, and is used to initialize the solution on finer grids. This multi-sized grid technique is applied to robotic path planning.

Textbook convergence proofs for empty domains, give the total number of computations to be c*N, where N is the number of cells in the finest grid, and c≈5 is some small number of iterations at each grid size. That convergence speed relies on being able to set the crudest grid cell size equal to the entire domain for the crudest solution. However, in a domain with obstacles, the number of needed iterations is given by c*(path length)/(path width), since path-width between obstacles, limits the largest cell size of the crudest grid that still preserves the topology of the computed paths. With largest grid cell size set equal to path width, the number of grid cells along the path equals (path length)/(path width). The iterative process of setting a cell's potential equal to the average of its neighbor's potentials, propagates a nonzero solution value a distance of one more grid cell along the path, each iteration. So it takes (path length)/(path width) iterations for a nonzero solution to propagate along the entire path length, when crudest grid cell size is equal to path width. After c*(path length)/(path width) iterations, with c≈5, the iteration converges on the crudest grid. Using this same number of iterations on each finer grid size, results in the bulk of the work being done by the c*(path length)/(path width) iterations on the finest grid size, for a total number of operations of approximately c*(path length)/(path width)*N, where N is the total number of cells in the finest grid.

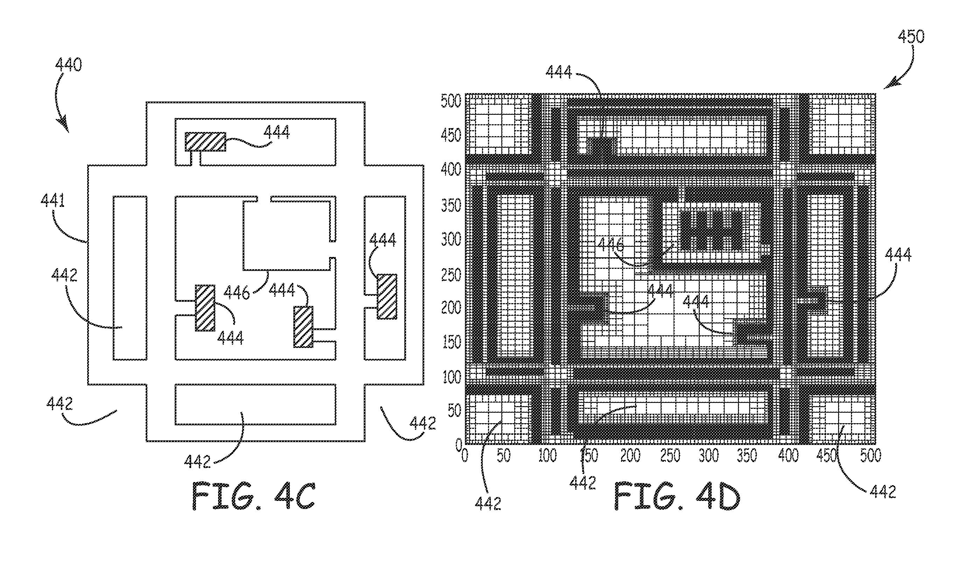

Use of a grid with varying sized cells is illustrated in regards to Figures 4C and 4D. In particular, in Figure 4C an example of an area 440 to be traversed in illustrated. As illustrated, the area to be traversed includes roads 441, parking lots 446, buildings 444 and open spaces 442. In one embodiment, a Lidar scans the road and records road edges and lane markers. Edge pixels are stored in a quadtree using a nearest-neighbor algorithm. In particular, the quadtree is an irregular quadtree since the size of the grids vary. Application of the irregular quadtree is illustrated in Figure 4D. As illustrated, the finest pixels (smallest grid points) are at obstacle edges. The use of a grid with varying cell size speeds up the computational time needed to determine a path for the vehicle. Having large grid cells where fine detail is not needed, results in a fewer number of grid cells. Doing computations on fewer grid cells takes less time than doing computations on more grid cells.

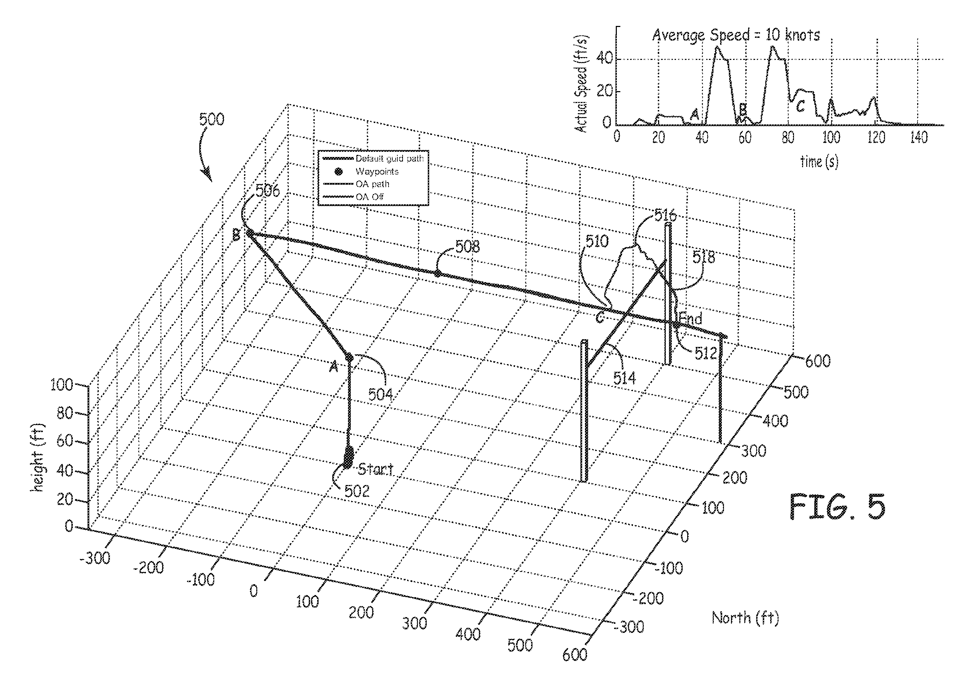

An example, of a grid system 500 in 3 dimensions is illustrated in Figure 5. In this example, an air vehicle is to traverse through the grid system 500 starting at point 502 through waypoints 504, 506, 508, 510 to ending point 512. In this example, an obstacle 514 is encountered between waypoint 510 and end point 512. The obstacle 514 in this example is a power line 514. When the vehicle encounters the obstacle 514, an alternate path 516 is determined and followed. When the vehicle is within some small distance (e.g. 1 foot) of the goal, that is considered close enough, so the system is deactivated so that it does not waste energy trying to correct tiny errors that are too small to matter.

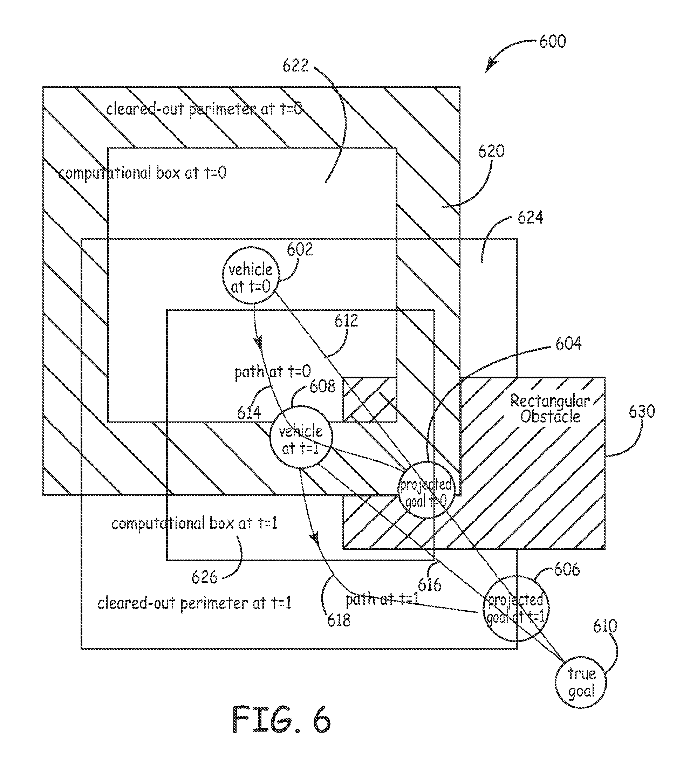

In one embodiment, a fixed-size computation box system 600 is moved over a much larger map, to limit the amount of computing needed, as illustrated in Figure 6. Computations are only done on the part of the map that is inside the computation box. However, in some cases the goal point is far away, so the goal point may be outside the computation box. If there were nothing inside the computation box that represented the goal, then no path towards the goal could be computed inside the computation box. So the goal is temporarily represented by an artificial goal at the edge of the computation box. The computation box system 600 keeps a box centered on a moving vehicle. In this embodiment, if the goal is inside the computation box, then a path to the goal is determined. If the goal is outside the computational box, a straight line is drawn from the vehicle to the goal. A projected goal is placed at the intersection of that line with the outside of the computational box. All obstacle representations are removed from the perimeter of the computational box so that if a projected goal ends up inside an obstacle, a path can still be planned towards the projected goal. As the vehicle approaches a projected goal, the computational box slides ahead, eventually allowing an unobstructed path to the true goal. Without this projected representation of the goal, onto an unobstructed part of the computation box, the Laplacian algorithm would not be able to find a path towards the true goal, since no evidence of the goal would exist inside the computation box. As Figure 6 illustrates, an initial position 602 of the vehicle at t=0, and an initial position 604 of the projected goal at t=0 are indicated. The projected position 604 at t=0 of the goal, along line 612 places the goal inside obstacle 630. So the perimeter 620 of the box at t=0 is cleared of obstacles. The second position 608 of the vehicle along the curved path 614 computed by the Laplacian algorithm at t=1 is illustrated. As illustrated a new second computation box 626 is centered about the actual second position 608 of the vehicle at t=1. Obstacle 630 no longer blocks the new curved path 618 to the new projected goal 606. The perimeter 624 of the second computation box 626 is cleared out. A third new path is then determined around the obstacle 630 to reach the true goal 610.

In regards to ground vehicles in an urban environment, a system must be used to deal with structured environments and intersection logic. Various maneuvers such as lane changing, passing, n-point turns are needed. Referring to Figure 7, an intersection illustration 700 is illustrated. As the Figure 7 illustrates intersections 702 and 704 with stop signs. In embodiment, when a vehicle arrives at a stop sign, it observes which other stop signs have queued traffic at them. The vehicle then waits until one vehicle leaves each of these queues and the intersection clears. Once the intersection has cleared, the vehicle then passes through the intersection. If another vehicle has not left its queue for 10 seconds after it could have, it is timed out and the current vehicle will proceed without waiting for the other vehicle. Referring to Figure 7 the intersection logic is as follows: Let N(i, j) represent intersection i, stop sign j (where j=0 is the intersection itself. If [(we arrive at N(i, j), j>0, at time t) and (at that time we determine the set K such that there are vehicle(s) at stop signs N(i, k) for k in K, j not in K) and (after that, for each k in K, vehicle either leaves N(i, k) and goes into N(i, 0) or forfeits its turn after 10 sec) and (after that, N(i, 0) is empty of vehicles, or a timeout of 10 seconds occurs)]. Then (we can go after 1 second, and MUST go within 10 seconds).

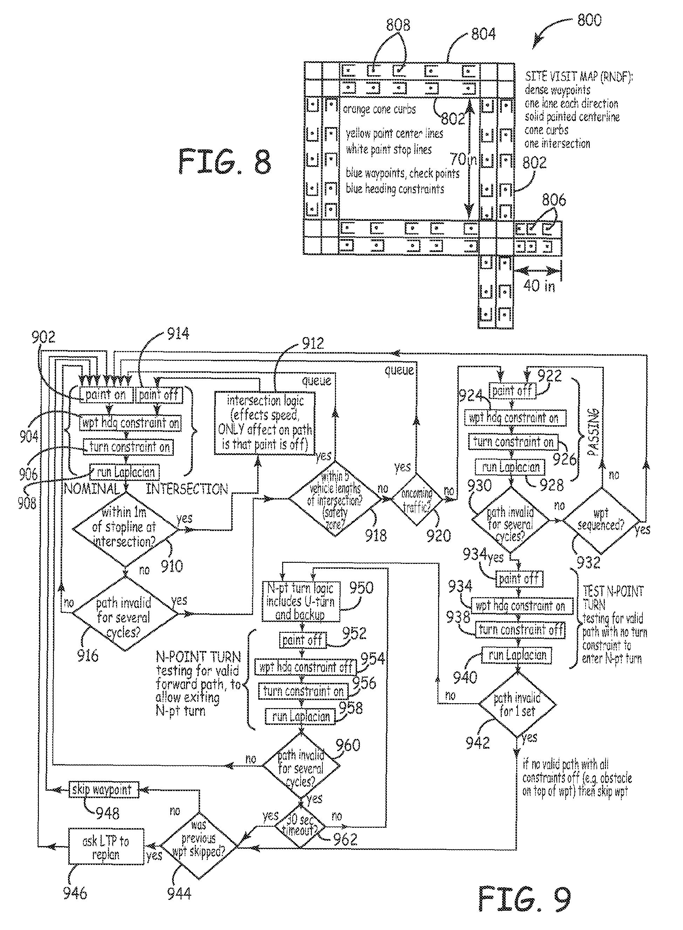

Referring to Figure 8, a vehicle control over a traverse area 800 of one embodiment is illustrated. As illustrated, the traverse area 800 is defined by curbs 802 and centerlines 804. autonomous vehicles traverse the roads via waypoints 806. Each vehicle includes heading constraints 808. The heading constraints require the vehicle to travel forward. An example of control logic 900 for a vehicle traversing an area such as area 800 of Figure 8 is illustrated in Figure 9. At (902) a paint on constraint is enacted. This means that center lines and stop lines need to be observed (i.e. cannot be crossed). At (904) a waypoint constraint is turned on. When the waypoint heading constraint is turned on, the vehicle must approach the next waypoint in the indicated direction. At (906) a turn constraint is turned on. When the turn constraint is turned on, the planned path radius is not allowed to be tighter than the minimum turn radius of the vehicle. A laplacian is then run to determine a path at (908). As illustrated, it is then determined if the vehicle is within 1 meter of a stop line or intersection at (910). If it is within one meter at (910), intersection logic such as that discussed above in regards to Figure 7 is enacted at (912). A paint-off constraint at (914) is used to allow the vehicle to pass through the intersection. If the vehicle is not within 1 meter of an intersection it is determined if the path is invalid for several cycles at (916). If it is determined that the path is not invalid, the process continues at (902).

If it is determined that the path is invalid at (916), it is then determined if the vehicle is within 5 vehicle lengths of an intersection (safety zone) at (918). If the vehicle is within 5 vehicle lengths of an intersection at (918), the process continues at (902). If the vehicle is not within 5 vehicle lengths of an intersection, it is determined if oncoming traffic is present at (920). If oncoming traffic is present at (920), the process continues at (902). If oncoming traffic is not present at (920), a passing sequence is initiated by turning the paint off at (922). The waypoint heading constraint is then turned on at (924). The turn constraint is then turned on at (926). A laplacian is then run at (928) to determine a path. It is then determined if the path is invalid for several cycles (930). If the path is not invalid at (930), it is determined if the way point sequence has been completed (932). If it is not completed at (932), the process continues at (922) otherwise the process continues at (902).

If the path is invalid for several cycles (930), a test n-point analysis is determined by first turning the paint off at (934). The waypoint heading constraint is turned on at (936). The turn constraint is turned off at (938). A laplacian is then run to determine a path at (940). It is then determined if the path was invalid for 1 second (942). If the path is not invalid at (942), an N-point turn logic including U-turn and back-up are initiated at (950). The paint is then turned off at (952). A waypoint heading constraint is turned off at (954). A turn constraint is turned on at (956). A laplacian is then run to determine a path (958). It is then determined if the path is invalid for several seconds at (960). If it is not determined that the path is invalid at (960), then the process continues at (902). If it is determined that the path is invalid at (960), it is then determined if a 30 second timeout has occurred at (962). If a 30 second timeout has not occurred at (962), the process continues at (950). If a 30 second timeout has occurred at (962), it is determined if previous waypoint was skipped at (944). If a previous waypoint was skipped at (944), the Long-Term Planner (LTP) is asked to re-plan at (946) and the process then continues at (902). If a previous waypoint was not skipped at (944), a waypoint is skipped at (948) and then the process continues at (902). At (942), if it was determined that the path was invalid for more than 1 second, the process continues at (944).

Referring to Figures 10 (A-D) an example of the use of Laplace's equation on traversing through an area is further explained. Referring to Figure 10A an illustration of a physical domain 1000. As illustrated, the physical domain includes an outer boundary 1002 that defines the domain to be traversed through and an interior 1004. Also illustrated in the physical domain 1000 are obstacles 1006-1 and 1006-2 and an end goal boundary 1008. Figure 10B illustrates a grid 1020 having grid squares (or points). As illustrated, each grid point is represented by a row and column number. Figure 10C illustrates the grid 1020 overlaid on the physical domain 1000. Figure 10D illustrates determined boundaries 1030 that will be used by a a Laplacian algorithm. In the numerical form of Laplace's equation, each interior point r(i, j) is assigned a potential v(i, j). In particular, v(i, j) = average of v of neighbors of (i, j) point. For example, v(i, j) = [v(i, j+1)+v(i-1, j) + v(i, j-1) + v(i+1, j)]/4 while v(i, j) is given specific values for boundary points. Referring to Figure 10C, grid points (squares), r(1,1), r(1,2), r(1,3).... r(2,1), r(3, 1), r(4, 1) ... and r(5, 3), r(5, 4) are examples of grid points on outer boundary 1002 or an obstacle 1006-1. In embodiments of the present invention, outer boundaries 1000 or obstacles 1006-1 are given a value of 0 so v(i, j) =0. As illustrated in Figure 10C, end-goal-boundary has a grid point of r(15, 4). An end-goal-boundary is given a value of -1, so v(15, 4) =-1. Interior points, such as points r(2, 2,), r(2, 3), r(2,4).. etc, are set equal to the average of its four neighbors. For example, v(2, 3) = [v(2,4) + v(1, 3) + v(2, 2)+v(3, 3)]/4 and v(3, 3) = [v(3, 4) + v(2, 3) + v(3, 2) + v(4, 3)]/4. In embodiments, this average process is applied repeatedly, resulting in potentials at all interior points that are equal to the average of their neighbor's potential.

Although specific embodiments have been illustrated and described herein, it will be appreciated by those of ordinary skill in the art that any arrangement, which is calculated to achieve the same purpose, may be substituted for the specific embodiment shown. This application is intended to cover any adaptations or variations of the present invention. Therefore, it is manifestly intended that this invention be limited only by the claims and the equivalents thereof.

## Claims

**1.** An autonomous vehicle (100), comprising:
an input-path generating module (102) configured to generate a planned path of an area to be traversed based on waypoints by applying a laplacian to a multi-sized cell grid of the area to be traversed;
sensors (122) configured to generate sensing data;
a guidance module (108) configured to generate guidance commands based at least in part on the planned path from the input-path generating module and the sensing data, the guidance module including,
a collision avoidance module (112) configured to generate alternative paths to avoid unforeseen obstacles; and
a vehicle control module (124) configured to control the dynamics of the vehicle based at least in part on the guidance command.

**2.** The vehicle of claim 1, wherein the input-path generating module (102) is further configured to receive the planned path information remotely.

**3.** The vehicle of claim 1, wherein the sensors (122) include at least one of an inertial measurement unit, a global positioning system and a barometric pressure sensor.

**4.** The vehicle of claim 1, wherein the sensors (122) include a collision avoidance sensor (120).

**5.** A method of traversing through a domain, the method comprising:
setting a set of waypoints (202) to construct a desired path through the domain that avoids boundaries and objects in the domain;
assigning a potential value of v(r)=0 for r on boundaries and obstacles;
assigning a potential value of v(r)=-1 for r on a goal region, wherein the goal is a point on a planned path;
obtaining a numerical solution to the desired path (210) with a Laplace's equation (208) by gridding up the domain with a multi-sized cell grid, wherein the cells near an object are denser then the cells away from the objects;
iteratively setting a potential at each interior point equal to the average of its nearest neighbors; and
following the numerical solution provided by the Laplace's equation to the goal region.

**6.** The method of claim 5, wherein when the domain to be traversed is a roadway, the method further comprising:
when encountering a stop sign at an intersection (702 and 704), observing other stop signs having associated queued traffic (912); and
waiting until at least one vehicle leaves its associated queue and clears the intersection (702 and 704) for each associated occupied stop sign before traversing the intersection (702 and 704) (912).

**7.** The method of claim 6, further comprising:
when a vehicle in an observed queue does not traverse the intersection (702 and 704) in a select time, traversing the intersection (912).

**8.** The method of claim 5, wherein when the domain to be traversed is a roadway the method further comprising:
employing heading constraints that define the movements of the vehicle. (904)

**9.** The method of claim 8, further comprising:
turning off heading constraints during select maneuvers (954).

**10.** The method of claim 5, wherein when the domain to be traversed is a roadway the method further comprising:
implementing at least one of a paint-on constraint (902), a waypoint-heading constraint (904) and a turn constraint (906) in traversing the roadway.

**10.** The method of claim 5, wherein when the domain to be traversed is a roadway the method further comprising:
implementing at least one of a paint-on constraint (902), a waypoint-heading constraint (904) and a turn constraint (906) in traversing the roadway.
